# Europäisches Patentamt

(19) **European Patent Office**

**Office européen des brevets**

(11) Veröffentlichungsnummer: **0 157 815**

**B1**

(12) **EUROPÄISCHE PATENTSCHRIFT**

(45) Veröffentlichungstag der Patentschrift:
22.07.87

(51) Int. Cl.⁴: **H 02 K 21/08, H 02 K 21/24**

(21) Anmeldenummer: **84903475.6**

(22) Anmeldetag: **26.09.84**

(86) Internationale Anmeldenummer:
**PCT/CH 84/00154**

(87) Internationale Veröffentlichungsnummer:
**WO 85/01619 (11.04.85 Gazette 85/09)**

(54) **WECHSELSTROM-SYNCHRON-SERVOMOTOR.**

(30) Priorität: **03.10.83 CH 5374/83**

(43) Veröffentlichungstag der Anmeldung:
**16.10.85 Patentblatt 85/42**

(45) Bekanntmachung des Hinweises auf die Patenterteilung:
**22.07.87 Patentblatt 87/30**

(84) Benannte Vertragsstaaten:
**CH DE FR GB LI SE**

(56) Entgegenhaltungen:
DE-A-2 208 854
DE-B-1 096 483
FR-A-784 532
FR-A-856 493
GB-A-30 167
GB-A-309 294
US-A-3 531 670
US-A-3 531 709

Patent Abstracts of Japan, Vol. 7, No. 21, (E-155)(1166) 27 January 1983
Patent Abstracts of Japan, Vol. 2, No. 147, page 9400E78, 8 December 1978
Elektrotechnik und Maschinenbau, Vol. 100, No. 2, February 1983, Wien (AT). W. R. Canders et al.: "Auslegung von Scheibenrotoren für hochtourige Synchronmaschinen mit Permanenterregung", pages 35-42

(73) Patentinhaber: **Mavilor Système SA, Place de Notre- Dame 162, CH- 1700 Fribourg (CH)**

(72) Erfinder: **JAUN, Hermann, Pfandstrasse 13, CH-8105 Regensdorf (CH)**

(74) Vertreter: **Scheidegger, Zwicky, Werner & Co., Stampfenbachstrasse 48 Postfach, CH- 8023 Zürich (CH)**

## Beschreibung

Die vorliegende Erfindung betrifft einen Wechselstrom-Synchron-Servomotor jener Art, bei welcher ein scheibenförmiger Rotor zwischen zwei Statorhälften angeordnet ist, die je mit einem Lager für eine den Rotor tragende Welle versehen sind und je einen mit mehreren Radialnuten versehenen Magneteisenteil und eine elektrische Wicklung mit in die Radialnuten eingelegten Leitern aufweisen, wobei der Rotor eine geradzahlige Anzahl von flachen Permanentmagnetstücken mit Parallel zur Welle verlaufenden Magnetfeldlinien aufweist, welche Permanentmagnetstücke unter Belassung von Zwischenräumen eine ringartige Reihe um eine auf der Welle sitzende Nahe aus magnetisch nichtleitendem Material bilden und als Magnetpolflächen wirkende Flachseiten aufweisen, die in parallelen Ebenen, zu denen die Achse der Welle senkrecht verläuft, liegen und in der Reihe abwechselnde Nord- und Südpole sind, und wobei die Zwischenräume zwischen benachbarten Permanentmagnetstücken radial nach aussen hin erweitert sind.

Ein Motor mit einem Rotor der geschilderten Bauart ist z.B. aus einer japanischen Patentanmeldung gemäss der Veröffentlichung JP-A 53-116 410 (1978) bekannt. Dabei handelt es offensichtlich um einen Motor mit relativ geringer Leistung, z.B. für den Antrieb der Capstan-Welle eines tragbaren Kassetten-Tonbandgerätes.

Der Erfindung liegt die Aufgabe zugrunde, einen Wechselstrom-Synchron-Servomotor zu schaffen, der insbesondere für den Leistungsbereich von 50 W bis 50 kW dimensioniert werden kann und ein entsprechend hohes Drehmoment zu erzeugen vermag, wobei der Motor eine relativ kurze achsiale Abmessung und im Vergleich zu bekannten Servomotoren einen höheren Wirkungsgrad und ein kleineres Gewicht pro Leistungseinheit aufweisen soll. Weiter soll der zu schaffende Servomotor derart ausgebildet sein, dass sein Rotor möglichst verzögerungsfrei den an die Statorwicklungen gelieferten elektrischen Wechselstromimpulsen zu folgen vermag, die z.B. von einem maschinengeführten statischen Umrichter geliefert werden. Demgemäss soll der Rotor mit einer relativ geringen Masse behaftet sein und die Wicklung jeder Statorhälfte soll ein gedrängtes Volumen aufweisen können, damit die elektrische Induktivität möglichst klein bleibt. Auch ist es die Aufgabe der Erfindung, den Servomotor derart auszubilden, dass sein Rotor möglichst frei von Reluktanz ist, um eine gleichförmige Drehbewegung des Rotors auch bei ganz niedrigen Drehzahlen und geringer Last zu ermöglichen.

Diese Aufgaben sind durch den erfindungsgemässen Wechselstrom-Synchron-Servomotor gelöst, dessen wesentliche Ausbildungsmerkmale in Patentanspruch 1 definiert sind.

Einzelheiten und die Vorteile der Erfindung ergeben sich aus der nun folgenden Beschreibung von Ausführungsbeispielen des erfindungsgemässen Motors und aus den zugehörigen Zeichnungen, die rein beispielsweise zur Erläuterung der Erfindung dienen sollen.

Fig. 1 zeigt einen achsialen Schnitt durch einen Wechselstrom-Synchron-Servomotor gemäss der Erfindung;

Fig. 2 stellt einen Teil des Rotors des Servomotors gemäss Fig. 1 in Ansicht in Richtung der Welle dar, wobei die dem Betrachter zugewandte Deckscheibe zum Teil weggebrochen ist;

Fig. 3 ist ein achsialer Teilschnitt nach der Linie III-III. in Fig. 2, in grösserem Abbildungsmaßstab;

Fig. 4 zeigt eine etwas andere Ausführungsform des Rotors in Teilansicht in Richtung der Welle betrachtet;

Fig. 5 ist ein achsialer Teilschnitt nach der Linie V-V in Fig. 4, in grösserem Abbildungsmaßstab;

Fig. 6 ist eine schematische Darstellung, ähnlich der Fig. 2, zur Illustration der Ausgestaltung und Anordnung der Permanentmagnet-Polflächen des Rotors in bezug auf die elektrische Wicklung für eine Phase in einer einzelnen Statorhälfte;

Fig. 7 zeigt mehrere Diagramme zur Illustration des zeitlichen Verlaufes der induzierten elektrischen Spannungen in einem Dreiphasen-Motor gemäss der Erfindung;

Fig. 8 ist ein Spannungsvektoren-Diagramm für die Wicklung einer einzelnen Statorhälfte eines erfindungsgemässen Dreiphasen-Motors mit einer nicht durch drei teilbaren Anzahl Nuten; und

Fig. 9 ist ein analoges Spannungsvektoren-Diagramm für die in geeigneter Weise zusammengeschalteten Wicklungen der beiden Statorhälften des Dreiphasen-Motors, auf den sich Fig. 8 bezieht.

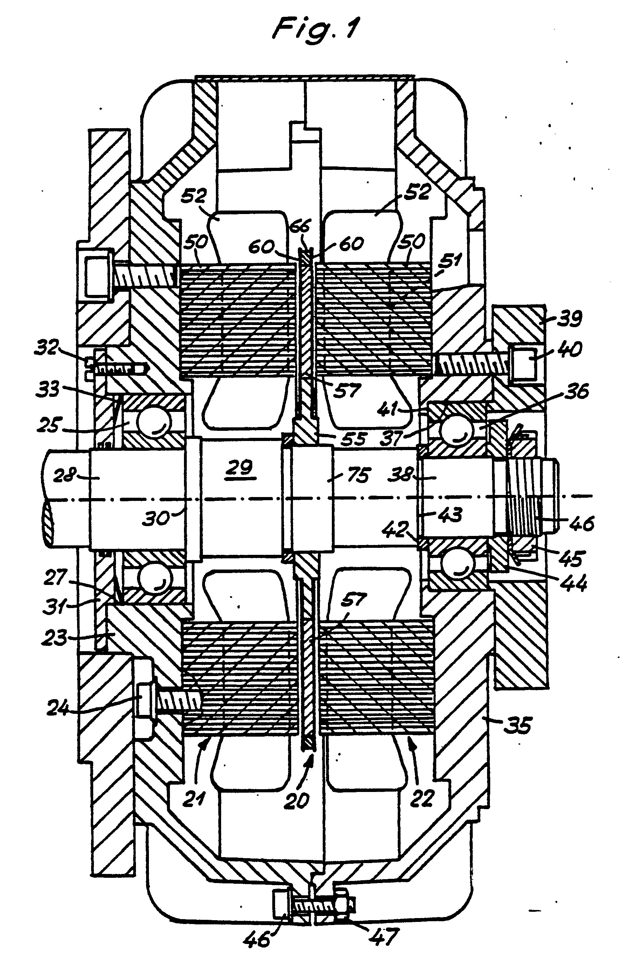

Der in Fig. 1 veranschaulichte elektrische Wechselstrom-Synchron-Servomotor weist einen scheibenförmigen Rotor 20 und zwei Statorhälften 21 und 22 auf, zwischen denen der Rotor 20 angeordnet ist. Das vom Rotor 20 abgewandte achsiale Ende der einen Statorhälfte 21 ist an einem Gehäuseteil 23 abgestützt und mit Hilfe von Schrauben 24, von denen nur eine sichtbar ist, befestigt. Der Aussenring eines Kugellagers 25 sitzt in einer Bohrung 27 des Gehäuseteilers 23, während der Innenring dieses Kugellagers auf einer im Durchmesser abgesetzten Endpartie 28 der den Rotor 20 tragenden Welle 29 sitzt und gegen eine Schulter 30 dieser Welle anliegt. Eine Ringscheibe 31 ist auf der Aussenseite des Gehäuseteiles 23 mit Hilfe von Schrauben 32 befestigt. Zwischen dieser Ringscheibe 31 und dem Aussenring des Kugellagers 25 ist eine Federringscheibe 33 eingeschaltet.

Das vom Rotor 20 abgewandte achsiale Ende der andern Statorhälfte 22 ist an einem Gehäuseteil 35 abgestützt und mittels nicht dargestellter Schrauben mit dem Gehäuseteil 35 verbunden. Der Aussenring eines zweiten Kugellagers 36 sitzt in einer Bohrung 37 des Gehäuseteils 35. Der Innenring dieses Kugellagers 36 sitzt auf einer im Durchmesser abgesetzten Endpartie 38 einer den Rotor 20 tragenden Welle 29. Eine Ringscheibe 39 ist mittels Schrauben 40 am Gehäuseteil 35 befestigt. Durch diese Ringscheibe 39 ist der Aussenring des Kugellagers 36 an eine Schulter 41 am Gehäuseteil 35 gedrückt und damit in achsialer Richtung gegen Verschiebung gesichert. Ein Druckübertragungsring 42 ist zwischen dem Innenring des Kugellagers 36 und einer Schulter 43 der Welle 29 eingefügt. Auf der gegenüberliegenden Seite des Kugellagers 36 befindet sich ein weiterer Drucküberstragungsring 44, der mittels einer Mutter 45 gegen den Innenring des Kugellagers 36 gedrückt ist. Die Mutter 45 ist auf einen Gewindeteil 46 der Welle 29 aufgeschraubt.

Die beiden Gehäuseteile 23 und 35, welche zusammen den Rotor 20 und die zwei Statorhälften 21 und 22 umschliessen, sind miteinander durch Schrauben 46 und Muttern 47 verbunden, von denen in Fig. 1 je nur eine sichtbar ist.

Jede der Statorhälften 21 und 22 weist einen ringförmigen Magneteisenteil 50 auf, der zweckmässig aus Bandmaterial gewickelt ist. In jedem Magneteisenteil 50 sind mehrere gegen den Rotor 20 hin offene Radialnuten 51 vorhanden, die je vom inneren Umfangsrand zum äusseren Umfangsrand des Magneteisenteiles verlaufen. In die Radialnuten 51 eines jeden Magneteisenteiles 50 sind die Leiter einer elektrischen Wicklung 52 eingelegt. Die Wicklungen 52 der beiden Statorhälften 21 und 22 sind miteinander elektrisch verbunden, wie noch erläutert wird.

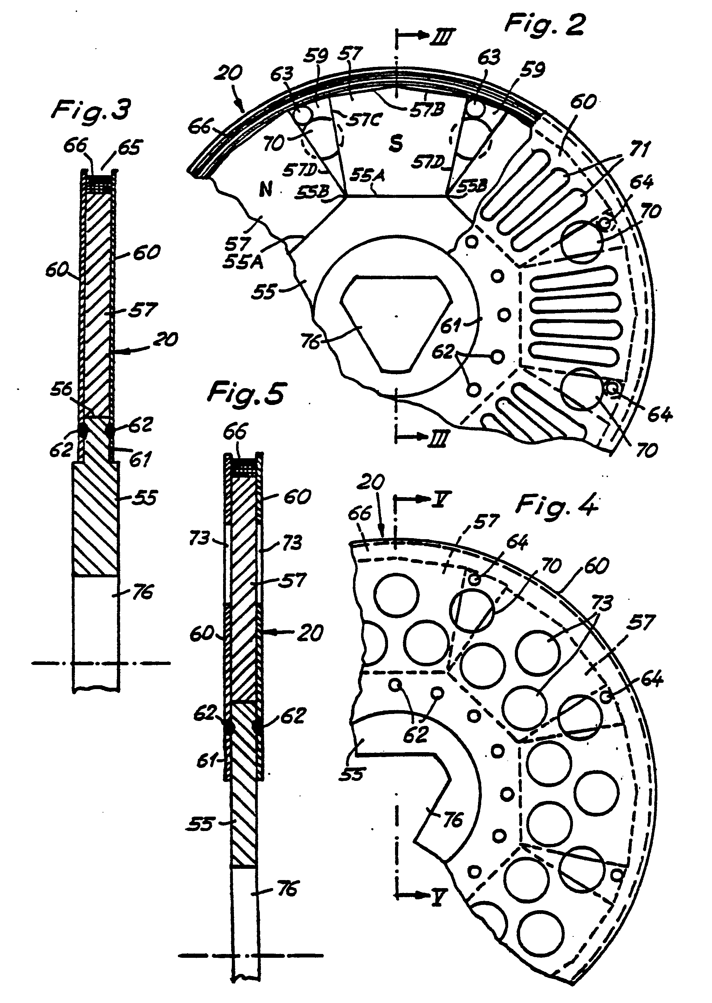

Der Rotor 20 weist eine auf der Welle 29 festsitzende Nabe 55 auf, die scheibenförmig ausgebildet ist und im Vergleich zu Ihrem Aussendurchmesser eine geringe achsiale Abmessung hat. Die Nabe 55 besteht aus magnetisch nichtleitendem Material, z.B. aus CrNi-Stahl oder Titan. Gemäss den Fig. 2 und 3 ist die äussere Peripherie der Nabe 55 durch ebene Flächen 55A gebildet, die entlang den Seiten eines regelmässigen Polygons mit einer geraden Anzahl Ecken verlaufen. Bei dem dargestellten Ausführungsbeispiel weist die äussere Peripherie der Nabe 55 acht ebene Flächen 55A und ebenso viele dazwischenliegende Kanten 55B auf. Auf jeder der ebenen Peripherieflächen 55A der Nabe 55 ist eine ebene Begrenzungsfläche 57A eines Permanentmagnetstückes 57 abgestützt und mittels eines Klebemittels, z.B. eines Zweikomponenten-Klebstoffes, befestigt. Die Permanentmagnetstücke 57 sind flache Platten mit etwa Trapezform, wie deutlich in Fig. 2 zu sehen ist. Die radial äussere Begrenzungsfläche 57B eines jeden Permanentmagnetstückes 57 ist entweder dachartig geknickt, wie in Fig. 2 dargestellt, oder entlang eines Kreisbogens um die Achse des Rotors 20 gewölbt. Zwischen den in einer ringförmigen Reihe aufeinanderfolgenden Permanentmagnetstücken 57 sind Zwischenräume 59 frei belassen. Die Permanentmagnetstücke 57 sind vorzugsweise aus Seltene-Erden-Material hergestellt und quermagnetisiert, so dass die Magnetfeldlinien senkrecht zu den etwa trapezförmigen, als Polflächen N und S wirkenden Flachseiten jedes Permanentmagnetstückes und somit parallel zur Achse der Welle 29 verlaufen. Die einander benachbarten Permanentmagnetstücke 57 sind entgegengesetzt magnetisiert, so dass an jeder Seite des Rotors 20 magnetische Nord- und Südpole miteinander abwechseln. Mit Vorteil werden alle Permanentmagnetstücke 57 in gleicher Form und Grösse hergestellt und gleichsinnig magnetisiert, bevor sie an der Nabe 55 in abwechselnd um 180° gewendeter Orientierung befestigt werden.

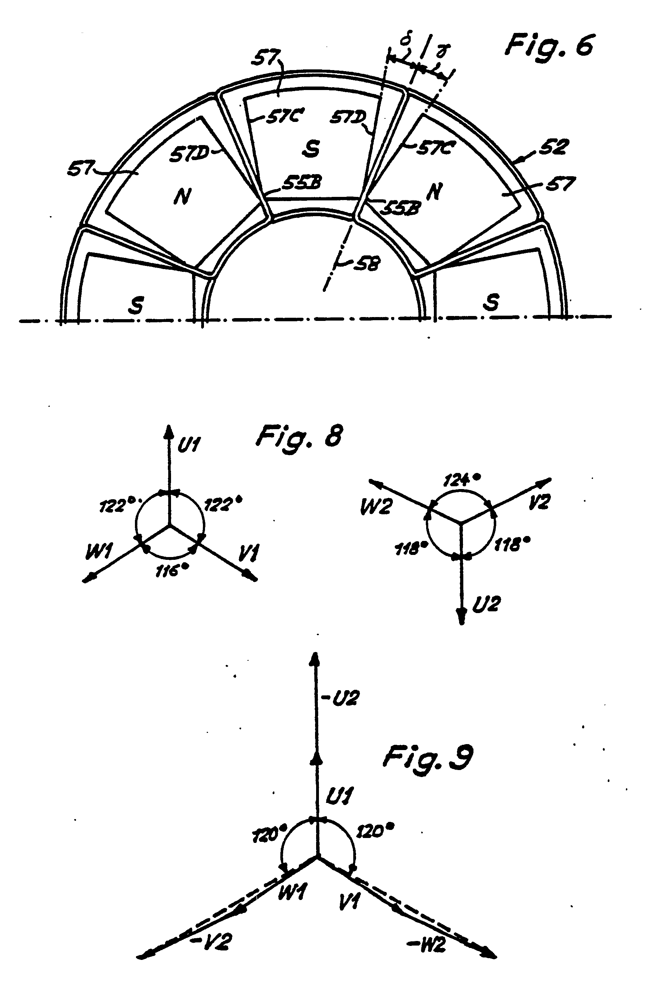

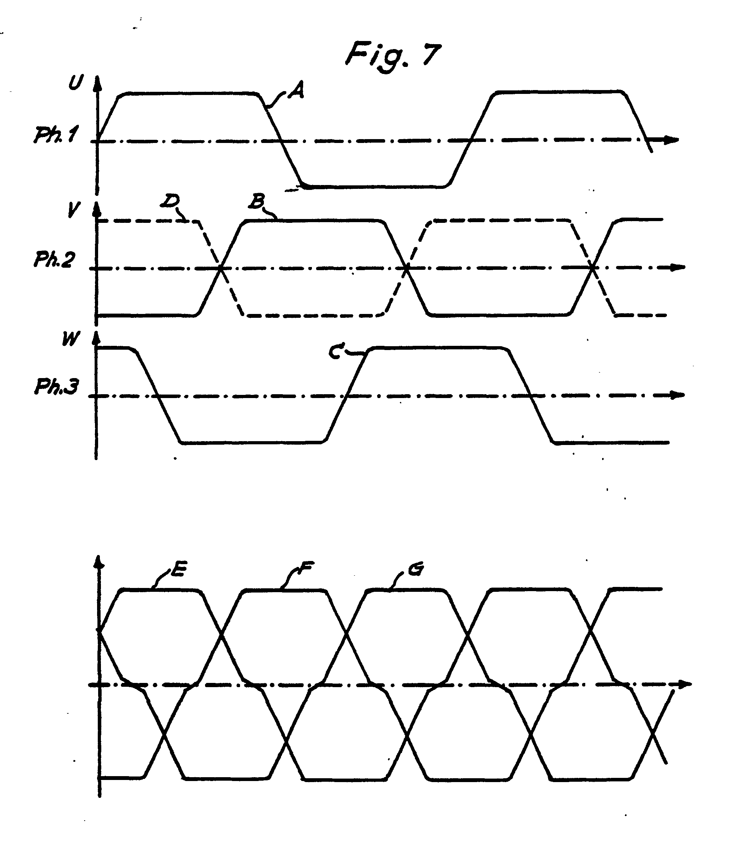

Die benachbarten Permanentmagnetstücke 57 weisen einander zugewandte Begrenzungsflächen 57C und 57D auf, zwischen denen jeweils einer der bereits erwähnten Zwischenräume 59 vorhanden ist. Jeweils zwei einander zugewandte Begrenzungsflächen 57C und 57D der benachbarten Permanentmagnetstücke 57 berühren sich an der Stelle, wo eine Kante 55B der Nabe 55 liegt. Von der Berührungsstelle an divergieren die einander zugewandten Begrenzungsflächen 57C und 57D gegen den äusseren Umfang des Rotors 20 hin, so dass jeder der Zwischenräume 59 zwischen einander benachbarten Permanentmagnetstücken 57 keilförmig ist, wie man deutlich in Fig. 2 erkennt. Aus Fig. 6 ist weiter ersichtlich, dass jeweils die zwei einander zugewandten Begrenzungsflächen 57C und 57D von benachbarten Permanentmagnetstücken 57 um einen spitzen Winkel γ bzw. δ entgegengesetzt geneigt sind in bezug auf eine gedachte Ebene 58, welche die Kante 55B an der Berührungsstelle der Begrenzungsflächen 57C und 57D enthält und bei entsprechenden Drehstellungen des Rotors 20 mit der Längsrichtung einer jeden Nut 51 im Magneteisenteil 50 der Statorhälfte 21 bzw. 22 zur Uebereinstimmung bringbar ist. Falls die Nuten 51 genau radial zur Achse der Welle 29 verlaufen, ist auch die Ebene 58 radial zur Achse der Welle 29. Vorzugsweise sind die Winkel γ und δ gleich gross, und sie haben einen Betrag im Bereich von 5° bis 20°, bei einem achtpoligen Motor vorzugsweise etwa 15°. Durch diese Ausbildung ist erreicht, dass der von jeder Magnetpolfläche N oder S ausgehende Magnetfluss zwischen zwei zusammengehörenden Spulenseiten 52A und 52B der Wicklungen 52 voll erfasst und praktisch ohne Unterbrechungen an den Stellen der Polaritätswechsel des Magnetflusses ausgenutzt werden kann, was zu einem verhältnismässig hohen Wirkungsgrad wesentlich beiträgt, und dass die Reluktanz des Rotors 20, d.h. die Nutenfühligkeit beim Drehen des Rotors vermindert ist infolge des geneigten Verlaufes der Begrenzungsflächen 57C und 57D der Permanentmagnetstücke in bezug auf die Richtung der Spulenseiten 52A, 52B.

Die in zwei parallelen Ebenen liegenden Flachseiten aller Permanentmagnetstücke 57 sind mit zwei parallelen, kreisringförmigen Deckscheiben 60 aus magnetisch nichtleitendem Material, z.B. CrNi-Stahl oder Titan, belegt und durch ein Klebemittel, z.B. einen Zweikomponenten-Klebstoff, mit diesen Deckscheiben verbunden. Die innere Umfangsrandpartie 61 jeder Deckscheibe übergreift die Nabe 55 und ist mit letzterer durch Schweisspunkte 62 verbunden. In der Nähe des äusseren Umfanges der Deckscheiben 60 ist in jedem Zwischenraum 59 ein achsialer Abstandhalter 63 zwischen den beiden Deckscheiben angeordnet und mit letzteren durch Schweisspunkte 64 verbunden. Die äussere Umfangsrandpartie jeder Deckscheibe 60 ragt in radialer Richtung über die äusseren Begrenzungsflächen 57B der Permanentmagnetstücke 57 hinaus, so dass dort ein Umfangskanal 65 gebildet ist. Im Umfangskanal 65 ist um die Permanentmagnetstücke 57 herum eine elastische Bandage 66 aus magnetisch nichtleitendem Material, vorzugsweise Glasfasermaterial, angeordnet. Die Bandage 66 dient dem Zweck, die Permanentmagnetstücke 57 mit ihren radial inneren Begrenzungsflächen 57A auch bei hohen Drehzahlen in Anlage an den ebenen Peripherieflächen 55A der Nabe 55 zu sichern und damit die Permanentmagnetstücke 57 formschlüssig mit der Nabe 55 auf Drehung zu verbinden zwecks sicherer Uebertragung der mechanischen Drehmomente von den Permanentmagnetstücken auf die Nabe.

Die beiden Deckscheiben 60 sind mit mehreren Oeffnungen 70 versehen, die auf die Zwischenräume 59 zwischen den Permanentmagnetstücken 57 ausgerichtet sind. Diese Oeffnungen 70 und die Zwischenräume 59 bilden am Rotor 20 Fenster, in welche gegebenenfalls Materialstücke zum Auswuchten des Rotors 20 eingelegt und mittels Klebstoff befestigt werden können. Wenn die Deckscheiben 60, wie erwähnt, aus metallischem Werkstoff bestehen, sind sie zweckmässig mit zusätzlichen, z.B. schlitzförmigen Oeffnungen 71 versehen, welche eine Dämpfung von Wirbelströmen in den Deckscheiben bewirken und zudem zur Verminderung der Masse des Rotors 20 beitragen.

Gemessen in Richtung der Rotationsachse des Rotors 20 ist die Stärke der Deckscheiben 60 gering im Vergleich zu der in gleicher Richtung gemessenen Dicke der Permanentmagnetstücke 57, welche Dicke ihrerseits gering ist im Vergleich zum Aussendurchmesser des Rotors 20. Bei einem Aussendurchmesser des des Rotors 20 von beispielsweise etwa 130 mm beträgt die in achsialer Richtung gemessene Dicke der Permanentmagnetstücke 57 z.B. 3,2 bis 4,0 mm, während die Stärke jeder Deckscheibe 60 z.B. 0,2 bis 0,3 mm beträgt. Es leuchtet ein, dass ein derartiger Rotor, der zudem völlig frei ist von spezifisch schwereren ferromagnetischen Werkstoffen, eine relativ geringe Masse hat und demzufolge mit einer entsprechend kleinen Massenträgheit behaftet ist. Deshalb lässt sich der Rotor durch die in den Statorhälften 21 und 22 mittels der Wicklungen 52 erzeugten Wandermagnetfelder verhältnismässig rasch beschleunigen und verzögern, so dass zwischen den momentanen Magnetfeldern der Statorhälften 21 und 22 einerseits und der jeweils entsprechenden Drehlage des Rotors 20 nur eine geringe zeitliche Verzögerung auftritt. Mit anderen Worten: Der beschriebene Rotor 20 ist imstande, seine Drehbewegungen besonders rasch den Veränderungen der Frequenz des die Statorwicklungen 52 speisenden Wechselstromes anzupassen.

Die beiden Deckscheiben 60 und die Bandage 66 verleihen dem Rotor 20 nicht nur eine erhöhte mechanische Festigkeit, sondern dienen zusätzlich auch zum Schutze der relativ leicht verletzlichen Seltene-Erden-Permanentmagnetstücke 57 durch Fremdteilchen, die in die Luftspalte zwischen dem Rotor 20 und den Magneteisenteilen 50 der Statorhälften 21 und 22 eindringen könnten.

Die Nabe 55 des Rotors 20 ist zweckmässig auf einen im Querschnitt unrunden Teil 75 der Welle 29 aufgesetzt und weist hierfür eine zentrale Oeffnung 76 auf, die entsprechend dem Querschnitt des Wellenteiles 75 geformt ist. Es ist aber auch möglich, den Wellenteil 75 und die Oeffnung 76 rund auszubilden und die Nabe 55 mittels Presssitz auf dem Wellenteil 75 zu befestigen.

Die in den Fig. 4 und 5 veranschaulichte Ausführungsform des Rotors 20 unterscheidet sich von derjenigen nach den Fig. 2 und 3 lediglich durch eine geringfügig andere Gestalt der Nabe 55 und durch anders ausgebildete und angeordnete Oeffnungen 73 in den Deckscheiben 60.

Wenn ein Motor der beschriebenen und in den Fig. 1 bis 6 dargestellten Art mit Dreiphasenwicklungen versehen ist, treten beim Betrieb die in Fig. 7 dargestellten induzierten Spannungen in jeder Statorhälfte 21, 22 auf. Die Kurven A, B und C zeigen den zeitlichen Verlauf der induzierten Spannungen U, V und W in den drei Phasenwicklungen. Die gestrichelte Kurve D entspricht der Kurve B mit entgegengesetztem Vorzeichen und stellt somit die Spannung -V dar. Die Kurve E stellt die arithmetische Summe U - V, die Kurve F die arithmetische Summe V - W und die Kurve G die arithmetische Summe W - U dar. Man erkennt, dass jeweils beim Polaritätswechsel oder Nulldurchgang der Kurven E, F und G praktisch keine tote Zone entsteht, in welcher die Spannung während einer merklichen Zeitspanne gleich Null ist. Diese vorteilhafte Wirkung ist durch die Tatsache begründet, dass die einander benachbarten Permanentmagnetstücke 57 jeweils bei einer Kante 55B der Nabe 55 sich berühren. Die unter

den entgegengesetzten Winkeln γ und δ geneigten Begrenzungsflächen 57C und 57D haben die schräg ansteigenden und ebenfalls schräg abfallenden Flanken der Spannungskurven A bis G zur Folge. Aus den Kurven E, F und G erkennt man weiter, dass alle positiven Halbwellen sich zu einer praktisch konstanten Summe ergänzen, die einer positiven Gleichspannung entspricht, deren Grösse mit der Amplitude jeder positiven Halbwelle übereinstimmt. Analoges gilt für die negativen Halbwellen, die sich zu einer ebenfalls praktisch konstanten Summe ergänzen. Dies bedeutet, dass für die Speisung der Wicklungen des beschriebenen Motors idealerweise ein Dreiphasenstrom mit einem den Kurven E, F und G annähernd entsprechenden Spannungsverlauf geeignet ist, welcher Dreiphasenstrom z.B. aus einem maschinengeführten statischen Umrichter gewonnen werden kann. Da jede der Kurven E, F und G nicht sehr weit von einer Sinusform abweicht, ist es ohne Nachteil auch möglich, die Wicklungen des Motors mit sinusförmigem Drehstrom zu speisen. Uebringens kann man durch eine relativ geringfügige Aenderung der Form der Permanentmagnetstücke 57 erreichen, dass die Kurven E, F und G ziemlich genau sinusförmigen Verlauf annehmen, so dass dann der Motor zur Speisung mit sinusförmigem Dreiphasenstrom besonders gut geeignet ist.

Es wurde bereits erwähnt, dass durch die Neigung der einander zugewandten Begrenzungsflächen 57C und 57D der Permanentmagnetstücke 57 um die Winkel γ und δ die Nutenfühligkeit des Rotors 20 vermindert wird. Für manche Anwendungsfälle ist jedoch eine weitergehende Reduktion der Reluktanz des Rotors erwünscht, damit auch bei sehr niedrigen Drehzahlen und niedriger Last ein kontinuierlicher Lauf des Rotors und damit ein ruhiger Betrieb des Motors möglich ist. Dies kann durch eine der nachstehend beschriebenen Massnahmen erreicht werden:

Eine der Massnahmen zum Verkleinern der Reluktanz des Motors besteht darin, die Anzahl der Nuten 51 in jedem Magneteisenteil 50 der beiden Statorhälften 21 und 22 gleich k. p. m ± 1 zu wählen, wobei k eine ganze Zahl, p die Anzahl der Phasen der Statorwicklungen 52 und m die Anzahl der Permanentmagnetstücke 57 des Rotors 20 bedeuten. Wenn z. B., wie in den Fig. 2 und 4 gezeigt, der Rotor 20 insgesamt 8 Permanentmagnetstücke 57 aufweist und die Wicklungen 52 der beiden Statorhälften 21 und 22 sogenannte Einlochwicklungen sind, werden die Magneteisenteile 50 zweckmässig je mit 25 Nuten 51 versehen.

Eine andere Massnahme zum Verkleinern der Reluktanz des Motors besteht darin, die Anzahl der Nuten 51 in jedem Magneteisenteil 50 zwar - wie üblich - gleich k. p. m zu wählen, wobel k, p und m die oben angegebenen Bedeutungen haben, aber die Nuten, einzeln oder gruppenweise, in ungleichmässigen Winkelabständen voneinander anzuordnen.

In den beiden geschilderten Fällen ergeben sich in jeder Statorhälfte 21, 22 für die verschiedenen Phasen Spannungsvektoren, die nicht gleich grosse Winkel einschliessen. In Fig. 8 sind links die Spannungsvektoren U1, V1 und W1 einer Dreiphasenwicklung der einen Statorhälfte 21 dargestellt, wobei angenommen ist, dass 25 Nuten im Magneteisenteil vorhanden sind und der Rotor acht Permanentmagnetstücke aufweist (k = 1; p = 8; m = 3; k. p. m + 1 = 25). Die Winkel zwischen den Spannungsvektoren betragen etwa 122°, 116° und 122°, anstatt je 120°. Analoges gilt für die andere Statorhälfte 22, deren Spannungsvektoren U2, V2 und W2 Winkel von etwa 118°, 124° und 118° einschliessen. Diese Unsymmetrie der Winkel lässt sich praktisch vollständig kompensieren, indem man passende Phasenwicklungen der einen Statorhälfte 21 und der andern Stätorhälfte 22 mit entgegengesetzten Polungen in Serie schaltet. Dabei entsteht das in Fig. 9 dargestellte Vektordiagramm, gemäss welchem die Spannungsvektoren U1 und -U2, V1 und -W2 sowie W1 und -V2 jeweils addiert sind. Die für beide Statorhälften zusammen resultierenden Spannungsvektoren schliessen zwischen sich Winkel von fast genau 120° ein.

Das gleiche Ergebnis kann man auch erzielen, wenn die Wicklung 52 einer jeden einzelnen Statorhälfte 21 bzw. 22 für jede Phase in zwei Teilwicklungen unterteilt wird, die in den Radialnuten 51 des Magneteisenteiles 50 derart angeordnet und derart miteinander in Serie geschaltet werden, dass die gewünschte Kompensation der Unsymmetrie der Teilwicklungen resultiert.

Noch eine andere Massnahme zum Verkleinern der Reluktanz des Motors besteht darin, die Permanentmagnetstücke 57 des Rotors 20 ungleich auszubilden und/oder in Umfangsrichtung des Rotors ungleich zu verteilen. Die Anzahl der Nuten 51 in jedem Magneteisenteil 50 der Statorhälften 21 und 22 kann dann - wie üblich - gleich k. p. m sein, wobei k, p und m die oben angegebenen Bedeutungen haben.

Schliesslich ist es zur Verminderung der Reluktanz des Motors auch möglich, bei gleichmässiger Verteilung gleicher Permanentmagnetstücke 57 und bei k. p. m Nuten 51 in den Magneteisenteilen 50 lediglich die eine Statorhälfte 21 gegenüber der andern Statorhälfte 22 um eine halbe Nutenteilung zu verdrehen. Die hierdurch erzielte Wirkung ist jedoch nicht so gut wie bei den zuvor erläuterten Massnahmen.

## Patentansprüche

1. Wechselstrom-Synchron-Servomotor mit einem scheibenförmigen Rotor (20), der zwischen zwei Statorhälften (21, 22) angeordnet ist, die je mit einem Lager (25, 36) für eine den Rotor tragende Welle (29) versehen sind und je einen mit mehreren Radialnuten (51) versehenen Magneteisenteil (50) und eine elektrische Wicklung (52) mit in die Radialnuten eingelegten Leitern aufweisen, wobei der Rotor (20) eine geradzahlige Anzahl von flachen Permanentmagnetstücken (57) mit parallel zur Welle (29) verlaufenden Magnetfeldlinien aufweist, welche Permanentmagnetstücke (57) unter Belassung von Zwischenräumen (59) eine ringartige Reihe um eine auf der Welle sitzende Nabe (55) aus magnetisch nichtleitendem Material bilden und als Magnetpolflächen (N, S) wirkende Flachseiten aufweisen, die in parallelen Ebenen, zu denen die Achse der Welle (29) senkrecht verläuft, liegen und in der Reihe abwechselnde Nord- und Südpole sind, und wobei die Zwischenräume (59) zwischen benachbarten Permanentmagnetstücken (57) radial nach aussen hin erweitert sind, dadurch gekennzeichnet, dass die äussere Peripherie der Nabe (55) entlang den Seiten eines regelmässigen Polygons verlaufende ebene Flächen (55A) und dazwischenliegende Kanten (55B) aufweist und die Permanentmagnetstücke (57) radial innen liegende ebene Begrenzungsflächen (57A) haben, die je auf einer der ebenen Peripherieflächen (55A) der Nabe (55) abgestützt sind, und dass eine in Umfangsrichtung des Rotors (20) verlaufende Bandage (66) aus magnetisch nichtleitendem Material um radial aussen liegende Begrenzungsflächen (57B) der Permanentmagnetstücke (57) herum angeordnet ist, durch welche Bandage (66) die Permanentmagnetstücke (57) in Anlage an der Nabe (55) gehalten und dabei formschlüssig mit der Nabe (55) auf Drehung verbunden sind, und dass die benachbarten Permanentmagnetstücke (57) einander zugewandte Begrenzungsflächen (57C, 57D) aufweisen, die an den Kanten (55B) zwischen den ebenen Peripherieflächen (56) der Nabe (55) miteinander praktisch in Berührung sind und in bezug auf die Richtung einer mit der Berührungsstelle (55B) fluchtenden Radialnut (51) des Magneteisenteils (50) einer der Statorhälften (21, 22) entgegengesetzt geneigt gegen den radial äusseren Umfang des Rotors (20) divergieren.

2. Motor nach Anspruch 1, dadurch gekennzeichnet, dass die Reihe der Permanentmagnetstücke (57) zwischen zwei ringförmigen Deckscheiben (60) aus magnetisch nichtleitendem Material angeordnet sind, welche Deckscheiben (60) an die als Magnetpole wirkenden Flachseiten (N, S) der Permanentmagnetstücke (57) anliegen und mit ihren inneren Umfangspartien (61) an der Nabe (55) befestigt sind.

3. Motor nach Anspruch 2, dadurch gekennzeichnet, dass die Permanentmagnetstücke (57) mittels eines Klebstoffes mit der Peripherie der Nabe (55) und mit den Deckscheiben (60) verbunden sind.

4. Motor nach Anspruch 2 oder 3, dadurch gekennzeichnet, dass in den Zwischenräumen (59) zwischen benachbarten Permanentmagnetstücken (57) je mindestens ein achsialer Abstandhalter (63) zwischen den Deckscheiben (60) angeordnet ist, der mit jeder der Deckscheiben (60) verbunden ist.

5. Motor nach einem der Ansprüche 2 bis 4, dadurch gekennzeichnet, dass zumindest eine der Deckscheiben (60) mit einer Anzahl von Oeffnungen (70, 71) versehen ist, von denen mindestens ein Teil (70) auf die Zwischenräume (59) zwischen benachbarten Permanentmagnetstücken (57) ausgerichtet sind, wodurch am Rotor (20) Fenster zum Einbringen von Auswuchtmaterial gebildet sind.

6. Motor nach einem der Ansprüche 1 bis 5, dadurch gekennzeichnet, dass die Permanentmagnetstücke (57) zur Hauptsache aus Seltene-Erden-Material bestehen.

7. Motor nach einem der anspüche 1 bis 6, dadurch gekennzeichnet, dass der Rotor (20) m gleiche und gleichmässig verteilte Permanentmagnetstücke (57) und jede Statorhälfte (21, 22) einen Magneteisenteil (50) mit k. p. m $\pm$ 1 gleichmässig verteilten Nuten (51) aufweist, wobei k eine ganze Zahl, m eine gerade Zahl und p die Anzahl der Phasen jeder Statorwicklung (52) bedeuten.

8. Motor nach einem der Ansprüche 1 bis 6, dadurch gekennzeichnet, dass der Rotor (20) m gleiche und gleichmässig verteilte Permanentmagnetstücke (57) und der Magneteisenteil (50) jeder Statorhälfte (21, 22) k. p. m ungleichmässig verteilte Nuten (51) aufweist, wobei k eine ganze Zahl, m eine gerade Zahl und p die Anzahl der Phasen jeder Statorwicklung (52) bedeuten.

9. Motor nach Anspruch 7 oder 8, dadurch gekennzeichnet, dass zur Kompensation der elektrischen Unsymmetrie der Wicklung (52) jeder Statorhälfte (21, 22) passende Teile der Wicklungen (52) der einen und der andern Statorhälfte (21, 22) mit entgegengesetzten Polungen in Serie geschaltet sind.

10. Motor nach Anspruch 7 oder 8, dadurch gekennzeichnet, dass die Wicklung (52) einer jeden Statorhälfte (21, 22) in mindestens zwei unterschiedliche Teilwicklungen aufgeteilt ist, die in den Radialnuten (51) des Magneteisenteiles (50) derart angeordnet und miteinander derart zusammengeschaltet sind, dass die elektrischen Unsymmetrien der Teilwicklungen praktisch gänzlich kompensiert sind.

11. Motor nach einem der Ansprüche 1 bis 6, dadurch gekennzeichnet, dass der Rotor (20) m ungleiche oder ungleichmässig verteilte Permanentmagnetstücke (57) und der Magneteisenteil (50) jeder Statorhälfte (21, 22) k. p. m gleichmässig verteilte Nuten (51) aufweist, wobei k eine ganze Zahl, m eine gerade Zahl und p die Anzahl der Phasen jeder Statorwicklung (52) bedeuten.

## Claims

1. Alternating-current-synchronous-servomotor having a disk-shaped rotor (20) which is located between two stator halves (21, 22) of which each is provided with a bearing (25, 36) for a shaft (29) supporting the rotor and comprise each a magnet iron part (50) having a plurality of radial grooves (51) and an electrical coil (52) having leads inserted in the radial grooves, which rotor (20) comprises an even number of flat permanent magnet pieces (57) having magnet field lines extending parallel to the shaft (29), which permanent magnet pieces (57) form an annular like series including interstices (59) extending around a hub (55) supported on the shaft and of a magnetically not conductive material and have flat sides acting as magnetic pole surfaces (N, S) which extend in parallel planes to which the axis of the shaft (29) extend perpendicularly and are serially alternating north and south poles, and whereby the interstices (59) between adjacent permanent magnet pieces (57) diverge radially towards the outside, characterized in that the outer periphery of the hub (55) comprises flat planes (55A) extending along the sides of a regular polygon and edges (55B) located therebetween, and the permanent magnet pieces (57) have flat limiting surfaces (57A) located radially inwards, which are supported each on one of the flat peripheral planes (55A) of the hub (55), and in that a bandage (66) extending in the circumferential direction of the motor (50) and made of a magnetically non-conductive material are located around radially outwards located limiting planes (57B) of the permanent magnet pieces (57), by means of which bandage (66) the permanent magnet pieces are held in abutment with the hub (55) and accordingly are connected form-locked to the hub (55) and rotationally locked therewith, and that the adjoining permanent magnet pieces (57) have mutually facing limiting planes (57C, 57D), which contact each practically at the edges (55B) between the flat peripheral planes (56) of the hub (55) and are oppositely inclined with respect to the direction of a radial groove (51) of the magnet iron part (50) of one of the stator halves (21, 22), which is aligned with the location of contact (55B), so that said mutually facing limiting planes diverge toward the radially outer circumference of the rotor (20).

2. Motor according to claim 1, characterized in that the series of permanent magnet pieces (57) is located between two annular cover plates (60) of magnetically nonconductive material, which cover plates (60) about the flat sides (N, S) of the permanent magnet pieces (57) acting as magnet poles and are mounted by their inner circumferential sections (61) to the hub (55).

3. Motor according to claim 2, characterized in that the permanent magnet pieces (57) are connected to the periphery of the hub (55) and to the cover plates (60) by means of an adhesive agent.

4. Motor according to claim 2 or 3, characterized in that in the interstices (59) between adjacent permanent magnet pieces (57) a respective at least one axial distance piece (63) is located between the cover plates (60) which is connected to each of the cover plates (60).

5. Motor according to any one of claims 2 to 4, characterized in that at least one of the cover plates (60) is provided with a plurality of openings (70, 71), of which at least a part (70) is aligned with the interstices (59) between adjoining permanent magnet pieces (57), whereby windows for mounting balancing material are formed at the rotor (20).

6. Motor according to any one of claims 1 to 5, characterized in that the permanent magnet pieces (57) consist mainly of rare earth material.

7. Motor according to any one of claims 1 to 6, characterized in that the rotor (20) comprises m same and equally distributed permanent magnet pieces (57) and each stator half (21, 22) a magnet iron portion (50) with k. p. m ± 1 equally distributed grooves (51), whereby k means an integral number, m an even number and p the number of phases of every stator winding (52).

8. Motor according to any one of claims 1 to 6, characterized in that the rotor (20) comprises m same and equally distributed permanent magnet pieces (57) and the magnet iron portion (50) of each stator half (21, 22) comprise k. p. m unequally distributed grooves (51), whereby k means an integral number, m an even number end p the number of phases of each stator winding (52).

9. Motor according to claim 7 or 8, characterized in that for the compensation of the electrical unsymmetry of the coil of each stator half (21, 22) suitable parts of the coils (52) of the one or the other stator half (21, 22) having opposite pole conditions are connected in series.

10. Motor according to claim 7 or 8, characterized in that the coil (52) of each stator half (21, 22) is divided into at least two differing partial coils which are arranged in the radial grooves (51) of the magnet iron portion (50) such and are interconnected such that the electrical unsymmetries of the partial coils are compensated practically completely.

11. Motor according to any one of claims 1 to 6, characterized in that the rotor (20) comprises m unequal or unequally distributed permanent magnet pieces (57) and the magnet iron portion (50) of each stator half (21, 22) comprises k. p. m equally distributed grooves (51), whereby k means an integral number, m an even number and p the number of phases of each stator winding (50).

## Revendications

1. Servomoteur synchrone à courant alternatif à rotor discoïdal (20), disposé entre deux moitiés de stator (21, 22) pourvues chacune d'un palier (25, 36) pour un arbre (29) portant le rotor et chacune comprenant une pièce de fer magnétique (50) portant plusieurs rainures radiales (51) ainsi que d'un enroulement électrique (52) dont les conducteurs sont insérés dans les rainures radiales, le rotor (20) présentant un nombre pair de pièces d'aimant permanent (57) plate dont les lignes de champ magnétique sont parallèles à l'arbre (29), ces pièces d'aimant permanent (57) séparées par des intervalles (59) formant une rangée annulaire autour d'un moyeu (55) en matériau magnétiquement non conducteur reposant sur l'arbre et comportant des faces plates servant de faces de pôles magnétiques (N, S) et étant disposées dans des plans parallèles auxquels l'axe de l'arbre (29) est vertical en constituant alternativement dans l'ordre, des pôles nord et sud, les intervalles (59) entre les pièces d'aimant permanent (57) voisines s'élargissant radialement vers l'extérieur, caractérisé en ce que le pourtour extérieur du moyeu (55) comporte des surfaces planes (55A) et des arêtes intermédiaires (55B) suivant les côtés d'un polygone régulier et que les pièces d'aimant permanent (57) possèdent des surfaces limites (57A) planes situées radialement à l'intérieur, chacune étant appuyée sur l'une des faces périphériques planes (55A) du moyeu (55) et en ce qu'un bandage (66) en matériau magnétiquement non conducteur est disposé s'étendant dans la direction périphérique du rotor (20) autour de surfaces limites (57B), situées radialement à l'extérieur, des pièces d'aimant permanent (57), ce bandage (66) maintenant les pièces d'aimant permanent (57) du dispositif contre le moyeu (55), ces pièces étant solidarisées en rotation avec le moyeu par une liaison de forme (55) et en ce que les pièces d'aimant permanent (57) voisines comportent des surfaces limites tournées les unes vers les autres (57C, 57D) qui sont pratiquement en contact entre elles aux arêtes (55B) entre les faces périphériques (56) planes du moyeu (55) et qui divergent de façon inversement oblique vers le pourtour radialement extérieur du rotor (20) par rapport à la direction d'une rainure radiale (51) de la pièce de fer magnétique (50) de l'une des moitiés du stator (21, 22), alignée sur l'emplacement de contact (55B).

2. Moteur selon la revendication 1, caractérisé en ce que la rangée de pièces d'aimant permanent (57) est disposée entre deux disques de recouvrement annulaires (60) en matériau magnétiquement non conducteur, ces disques de recouvrement (60) étant appliqués contre les faces plates (N, S) des pièces d'aimant permanent (57) servant de pôles magnétiques et en ce que leurs parties périphériques (61) sont fixées au moyeu (55).

3. Moteur selon la revendication 2, caractérisé en ce que les pièces d'aimant permanent (57) sont assemblées par une colle à la périphérie du moyeu (55) et aux disques de recouvrement (60).

4. Moteur selon la revendication 2 ou 3, caractérisé en ce qu'au moins une entretoise axiale (63) est disposée entre les disques de recouvrement (60) dans chacun des intervalles (59) entre des pièces d'aimant permanent (57) voisines, chaque entretoise étant fixée à chacun des disques de recouvrement (60).

5. Moteur selon l'une des revendications 2 à 4, caractérisé en ce qu'au moins l'un des disques de recouvrement (60) est pourvu d'un certain nombre d'ouvertures (70, 71) dont au moins une partie (70) sont orientées vers les intervalles (59) entre des pièces d'aimant permanent (57) voisines, ce qui constitue des fenêtres sur le rotor (20) pour y introduire du matériau d'équilibrage.

6. Moteur selon l'une des revendications 1 à 5, caractérisé en ce que les pièces d'aimant permanent (57) sont constituées principalement de terres rares.

7. Moteur selon l'une des revendications 1 à 6, caractérisé en ce que le rotor (20) comporte m pièces d'aimant permanent (57) semblables et régulièrement réparties et que chaque moitié de stator (21, 22) comporte une pièce de fer magnétique (50) avec k. p. m $\pm$ 1 rainures (51) régulièrement réparties, k représentant un nombre entier, m un nombre pair et p le nombre des phases de chaque enroulement de stator (52).

8. Moteur selon l'une des revendications 1 à 6, caractérisé en ce que le rotor (20) comporte m pièces d'aimant permanent (57) semblables et régulièrement réparties et que la pièce de fer magnétique (50) de chaque moitié de stator (21, 22) comporte k. p. m rainures (51) irrégulièrement réparties, k étant un nombre entier, m un nombre pair et p le nombre des phases de chaque enroulement de stator (52).

9. Moteur selon la revendication 7 ou 8, caractérisé en ce que des parties adéquates des enroulements (52) de l'une et de l'autre des moitiés de stator (21, 22) sont montées en série avec des polarités inverses pour compenser l'asymétrie électrique de l'enroulement (52) de chaque moitié de stator (21, 22).

10. Moteur selon la revendication 7 ou 8, caractérisé en ce que l'enroulement (52) de chacune des moitiés du stator (21, 22) est divisée en au moins deux enroulements partiels différents qui sont disposés dans les rainures radiales (51) de la pièce de fer magnétique (50) et interconnectés ensemble de façon à compenser pratiquement totalement les asymétries électriques des enroulements partiels.

11. Moteur selon l'une des revendications 1 à 6, caractérisé en ce que le rotor (20) comporte m pièces d'aimant permanent (57) différentes ou irrégulièrement réparties et que la pièce de fer magnétique (50) de chaque moitié de stator (21, 22) comporte k. p. m rainures (51) régulièrement réparties, k représentant un nombre entier, m un nombre pair et p le nombre des phases de chaque enroulement de stator (52).

## Fig.1

0 157 815

Fig. 3

Fig. 2

Fig. 5

Fig. 4

3

0 157 815

Fig. 6

Fig. 8

Fig. 9

5

# Fig. 7